Europäisches Patentamt

European Patent Office

Office européen des brevets

(11) Publication number: **0 193 950**
A2

(12) **EUROPEAN PATENT APPLICATION**

(21) Application number: **86102940.3**

(22) Date of filing: **06.03.86**

(51) Int. Cl.⁴: **G 01 K 7/24**, G 01 K 1/02

(30) Priority: **07.03.85 US 709471**

(43) Date of publication of application: **10.09.86**
Bulletin 86/37

(84) Designated Contracting States: **AT BE CH DE FR GB IT LI LU NL SE**

(71) Applicant: **SPACELABS, INC., 4200 150th Avenue NE, Redmond Washington 98073-9713 (US)**

(72) Inventor: **Powers, Lauri M., 5431 S.W. Dolph Court, Portland Oregon (US)**

(74) Representative: **Vossius & Partner, Siebertstrasse 4 P.O. Box 86 07 67, D-8000 München 86 (DE)**

(54) **Method and apparatus for automatic temperature measurement.**

(57) An electrical circuit for coupling to probes coupled to a patient for measuring the body temperature of the patient. A first circuit portion when coupled to the probe which may be selected from a plurality of different probe types generates an electrical signal representative of the patient's body temperature at the location of the coupling of the probe thereto. A second circuit converts the electrical signal to a temperature reading in degrees on a preselected scale. The second circuit includes: an identifying circuit which automatically identifies the type of probe to which the first circuit is coupled; short circuit detection; a digitizing circuit for digitizing the electrical signal from the first circuit; and a processing means including a look up table for each probe type for determining the temperature reading in degrees from the digitized signal and the output of the identifying circuit. The first circuit includes a linearization circuit for partially linearizing the proportionality of the electrical signal with patient temperature. A plurality of temperature channels may be provided with the inclusion of an electrical switching circuit for sequentially coupling each of the probes to the digitizing circuit.

# VOSSIUS & PARTNER

PATENTANWÄLTE

EUROPEAN PATENT ATTORNEYS

SIEBERTSTRASSE 4 · 8000 MÜNCHEN 86 · PHONE: (089) 47 40 75
TELEX 529 453 VOPAT D      TELEFAX (089) 47 20 01 (GR. II + III)

**0 193 950**

Our ref.: U 377 EP
Case: V-709,471-Z
Spacelabs, Inc.                    March 6, 1986

## METHOD AND APPARATUS FOR
## AUTOMATIC TEMPERATURE MEASUREMENT

The present invention relates to the measurement of patient body temperature, more particularly, to the measurement of body temperature automatically by an electrical circuit in response to a probe whch is chosen from a variety of probe types.

Patient monitoring, particularly for patients in critical care or intensive care units, includes the automatic continuous monitoring of several different body parameters such as EKG, blood pressure, respiration and body temperature. In the measurement of temperature it is often desirable to measure the body temperature using a probe selected from a variety of different probe types. Examples of acceptable probes in common use today, sometimes in the same hospital, are the YSI400 and YSI700 probes, made by Yellow Springs Instrument Co., of Yellow Springs, Ohio. These probes are not electrically interchangeable.

Thermistor sensor portions of the probe are attached to the patient's body at desired locations. The thermistors are electrically connected to the plug portion of the probe which in turn is coupled to a temperature monitor's electrical circuitry. The probes convert the patient's body temperature to a resistance which is interpreted by the circuitry and displayed as a temperature in degrees of a preselected scale on the monitor display.

In the prior art, there are a plurality of different probe types, such as those enumerated above, each type requiring different processing to determine the correct temperature reading. Prior art temperature monitor circuits that the Inventor is aware of are designed to work with a single probe type at a time. It is desirable to provide an electrical circuit for the measurement of temperatures that automatically operates in response to the type of probe being used.

The present invention relates to an electrical circuit designed to provide a temperature reading in degrees on a preselected scale when coupled to any probe selected from a plurality of different probe types, which probe in turn is coupled to a patient. The circuit operates automatically with different probe types.

The electrical circuit includes a first circuit which, when coupled to the probe, generates an electrical signal representative of the body temperature at the location of the probe. A second circuit then converts the electrical signal to a temperature quantity in degrees on a preselected scale, the second circuit including means for automatically identifying the probe type of the selected probe associated with the converted electrical signal.

In the preferred embodiment, the second circuit includes a digitizing means including an analog to digital (A/D) converter which provides a multibit digital output signal. A logic circuit merges the output of the identifying circuit with the multibit digital output signal to form a combined digital signal. Processing means including look up tables for each probe type converts the combined digital signal to a temperature reading in degrees on a preselected scale.

In the preferred embodiment the probe comprises a thermistor and the first circuit includes a linearization circuit which partially linearizes the proportionality between the electrical signal output of the first circuit and body temperature regardless of the probe type of the selected probe. The linearization circuit includes a resistance circuit in parallel with the thermistor.

When a plurality of probes are used simultaneously the electrical circuit further comprises an electrical switching means as part of the first circuit. The switching means sequentially couples each of the probes to the second circuit. The logic circuit means in response to both the switching means and identifying circuit provides an output signal to be merged with the multibit digital output signal to form a combined output signal. The logic circuit means output signal is representative of the identity and type of the probe associated with the multibit output signal.

In the preferred embodiment the electrical circuit comprises a linearization and identifying circuit for each probe.

The present invention further relates to a method of measuring the temperature of a patient from at least one probe coupled to the patient. An electrical signal is generated for each coupled probe which is proportional to the temperature of the patient at a particular body location associated with the probe. An electrical signal is also generated which is representative of the type of probe associated with the electrical signals generated above.

The method further includes preprocessing of the electrical signal before digitizing it whereby the multibit digital output signal is substantially linearly proportional to temperature.

The method of the present invention further comprises coupling at least one probe to the digitizing circuit and merging the probe type identifying signal with the associated multibit digital output signal. Then the combined multibit digital output signal is compared with one of a plurality of look up tables associated, respectively, with the plurality of different probe types to determine the temperature in degrees on a preselected scale. In the preferred embodiment, the look up table contains temperatures to the nearest degree and an interpolation is performed to find temperature to a fraction of a degree in response to the multibit digital output signal.

FIG. 1 is an overall block diagram of the preferred embodiment temperature measuring circuit of the present invention.

FIGS. 2A and 2B are schematics of two probes for use with the present invention.

FIG. 3 is a more detailed schematic of a first portion of the temperature measuring circuit of FIG. 1.

FIG. 4 is a timing diagram of a switch control circuit portion of FIG. 3.

FIG. 5 is a more detailed schematic of a second portion of the schematic of FIG. 1.

FIG. 6 is a more detailed schematic of a third portion of the circuit of FIG. 1.

FIG. 7 is a curve relating temperature to the output of an analog to digital converter portion of the circuit of FIG. 5.

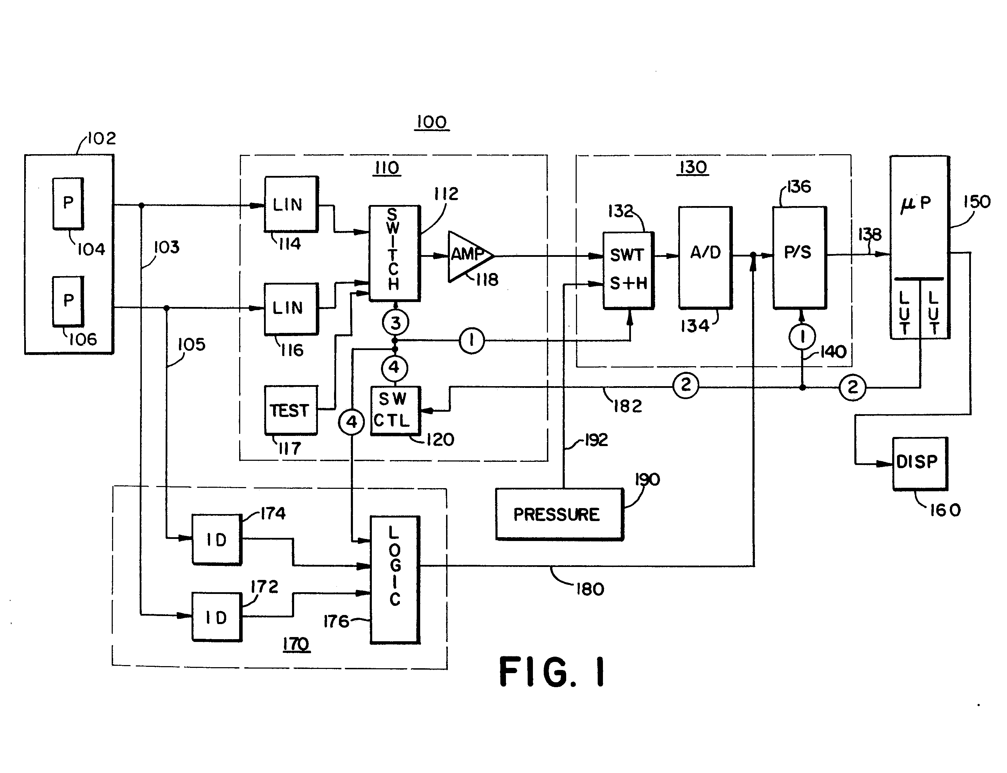

Referring now to FIG. 1, a block diagram schematic of the preferred embodiment temperature monitoring circuit designated generally 100 is provided. Probe input terminal 102 is adapted to accommodate at least two probe inputs each of which probes is coupled to an amplifier circuit designated generally 110 which in turn provides an electrical signal representative of body temperature to digitizing circuit designated generally 130. The multibit digital output of the circuit 130 is transmitted serially to microprocessor 150 which interprets the multibit digital output and causes a temperature reading to be displayed on display 160.

At the same time a probe identification circuit designated generally 170 coupled to probe input terminal 102 provides a signal to circuit 130 which identifies the type of probe associated with each multibit digital output signal. Circuits 130 and 170 along with processor 150 can be thought of as a circuit coupled to circuit 110 for converting the electrical signal from circuit 110 into a temperature reading in degrees on a preselected scale.

FIG. 1 also shows a pressure monitoring circuit 190 coupled to circuit 130 but it forms no part of the present invention.

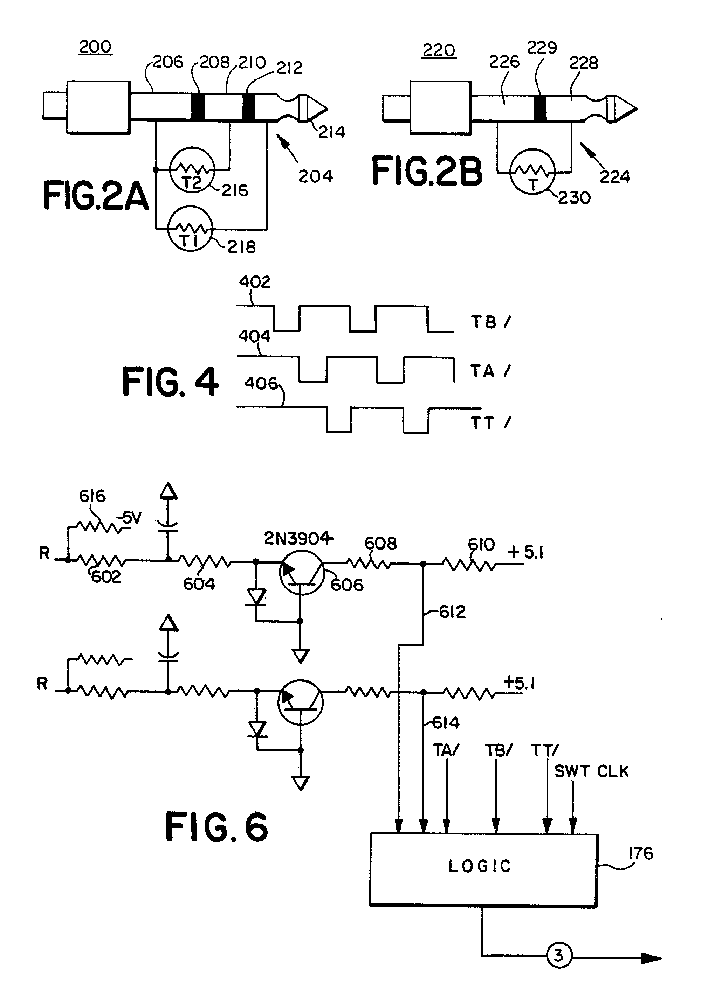

FIGS. 2A and 2B represent two different probes 200 and 220 respectively, which are suitable for use with the present invention. In the preferred embodiment, probe 200 is a Model No. YSI 700 probe while probe 220 is a Model No. YSI400 probe, both manufactured by Yellow Springs Instrument Company, Yellow Springs, Ohio. A sensor coupled to a body location of a patient is coupled to the end of the probe. The other end of the probe is a plug for mating engagement with a jack whereby the probe is coupled to a circuit.

Referring to FIG. 2A, probe 200 comprises a pair of thermistors 216 and 218 which are applied to a location on the patient's body where a temperature reading is desired. The thermistors are contained in a probe tip at the end of a cable. The probe tip is attached to the patient by an adhesive patch, for example. Probe 200 further comprises a plug portion designated generally 204 and adapted for mating engagement with a standard jack such as probe jacks 104 or 106 located at terminal 102.

Plug portion 204 comprises an electrically conducting barrel portion 206, separated by insulator 208 from conducting ring portion 210, which in turn is separated by insulator 212 from conducting tip portion 214. Thermistor 216 is electrically coupled to barrel and ring portions 206 and 210, respectively, while thermistor 218 is electrically coupled to barrel and tip portions 206 and 214, respectively.

In FIG. 2B, probe 220 is similar to probe 200 except that it comprises a single thermistor sensor 230 coupled to barrel and tip portions 226 and 228, respectively, of plug portion 224. Portions 226 and 228 are separated by insulator 229.

The thermistors 216 and 218 of probe 200 are provided by the manufacturer to be used in a thermilinear resistive linearizing circuit published by the manufacturer and comprising: thermistor 218 coupled through a 12000 ohm resistor and 5700 ohm resistor in series to 1.759 volts while thermister 216 is connected in series with the 5700 ohm resistor to the +1.759 volts. This circuit is designed to provide full linearization of the output of the YSI700 probe. (It is suggested in the literature that a single resistor be connected between thermistor of a single thermistor probe and a voltage source for full linearization of the output of the single thermistor probe.) The thermilinear circuit provides a voltage output which varies linearly with temperature. The thermilinear circuit is neither useable with probe 220 nor is it employed by this invention.

As will be explained below, the present invention includes a linearizing circuit which can be used with either probe 200 or probe 220. The presence or absence of thermistor 216 is used to differentiate between YSI700 and YSI400 type temperature probes.

In the preferred embodiment probe input terminal 102 will acommodate two probes with probe jacks 104 and 106. However, the teachings of the present invention are equally applicable to one probe or more than two probes, such as three or four probes or any number which is practical.

The probe jacks 104 and 106 are coupled to a switch circuit 112 of circuit 110 via partial linearization circuits 114 and 116, respectively, also part of amplifier circuit 110. The output of switch 112 is coupled as an input to amplifier 118.

The switch circuit 112 (described in more detail hereinafter) is controlled by switch control circuit 120 in response to clock and control signals via bus 182 from microprocessor 150. Using the switch circuit 112 and control circuit 120 to couple alternatively probes in jacks 104 and 106 to amplifier 118 simplifies the circuit design since only one amplifier 118 and digitizing circuit 130 are needed for the two probes.

The partial linearization circuits are described in more detail below, but the temperature to resistance curves of these thermistor probes 200 and 220 are very non-linear. These linearization circuits 114 and 116 partially linearize the curve.

Circuit 130 is a digitizing circuit comprising a switch and sample and hold circuit 132 whose input is coupled to the output of amplifier 118. The output of circuit 132 is coupled to the input of analog to digital converter 134. A/D converter 134 provides a 12 bit digital output signal in parallel to parallel to serial converter circuit 136. Circuit 136 provides a serial bit stream via line 138 to microprocessor 150. The clock signal for the circuit 136 is provided via line 140 from microprocessor 150.

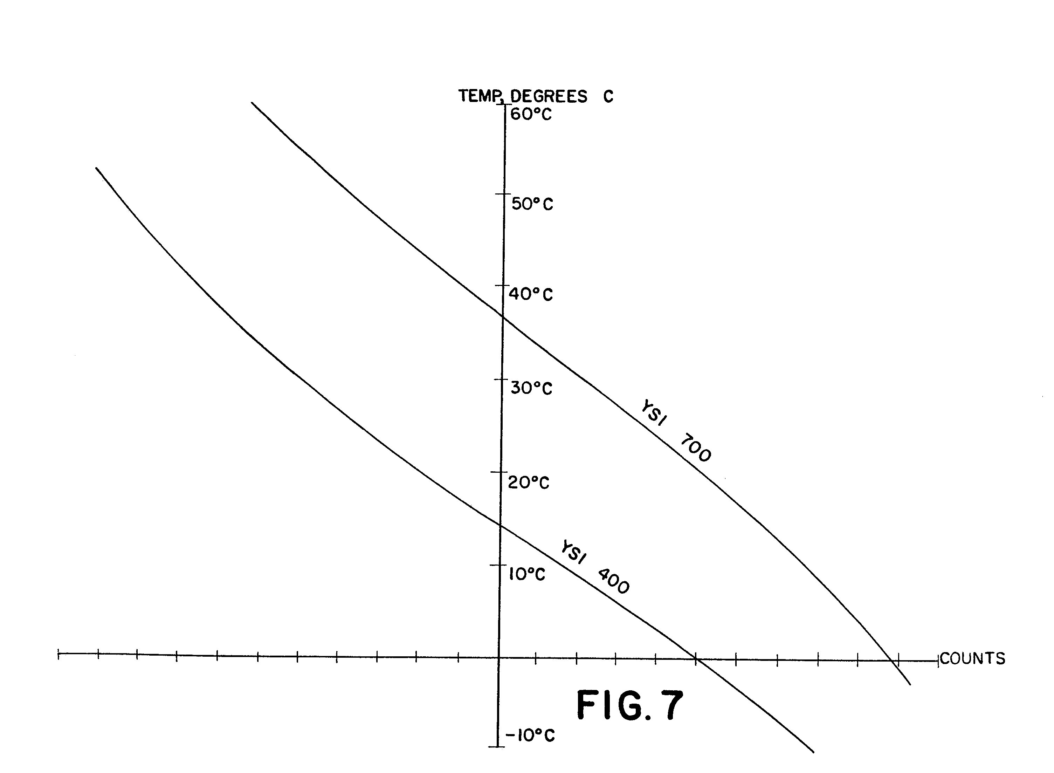

Probe jacks 104 and 106 are also coupled to individual identification circuits 172 and 174, respectively, which form part of circuit 170. They will be described in more detail in connection with FIG. 6. These circuits identify which probe type they are coupled to and the information is gated through logic circuit 176 by signals provided by the switch control circuit 120 via line 178. The output signals of logic circuit 176 are merged with the multibit digital output signal of A/D converter 134 via bus 180.

A combined 16 bit multibit digital output signal is provided to microprocessor 150. Three of the bits identify which temperature channel the incoming digital output signal is associated with and what type of probe is being used. A fourth bit relates to the status of the circuit power supply while the remaining 12 bits relate to the patient's temperature.

There are at least three methods for converting the 12 bit output of the A/D converter into temperature. Firstly, it can be computed by use of the following equation:

$$RYSI = 3200/[(4668.634457/A/D\ count)-1]$$

where A/D count is the binary count of the remaining 12 bits provided by the A/D converter 134. Temperature is related to RYSI by using either of the following logarithmic approximations:

$$T_{°K} = 1/[A + B\ \ln(RYSI) + C[\ln(RYSI)]^3\ ] \text{or}$$
$$T_{°K} = 1/[E + F\ \ln(RYSI) + G[\ln(RYSI)]^2 + H\ [\ln\ (RYSI)]^3]$$

For YSI400

$$A = 1.46755675 \times 10^{-3}$$
$$B = 2.383235108 \times 10^{-4}$$
$$C = 1.12800833 \times 10^{-7}$$

$$E = 1.50708993437 \times 10^{-3}$$
$$F = 2.233174786 \times 10^{-4}$$
$$G = 1.885646632 \times 10^{-6}$$
$$H = 2.277838652 \times 10^{-8}$$

For YSI700:

$$A = 1.24065977859 \times 10^{-3}$$
$$B = 2.3613204466 \times 10^{-4}$$
$$C = 8.96136878 \times 10^{-8}$$

$$E = 1.24782583937 \times 10^{-3}$$
$$F = 2.340794696 \times 10^{-4}$$
$$G = 1.887278395 \times 10^{-7}$$
$$H = 8.417025238 \times 10^{-8}$$

To convert from °Kelvin to °Centigrade or °Fahrenheit the following equations are used:

$$T_{°C} = T_{°K} - 273.16$$
$$T_{°F} = (T_{°C})(9/5) + 32$$

The temperature can be calculated for each A/D output using the processing power of the processor 150 or the results of these calculations (for all or some of the AD count values) can be stored in look up tables for rapid access.

In the perferred method look up tables are generated and stored in processor 150 using the resistance versus temperature tables provided by the probe manufacturer (YSI). These table are provded to 1°C resolution.

From the equation for RYSI provided above, we get:

-11-

$$A/D \text{ Count} = 4668.63447/(3200/RYSI + 1)$$

Look up tables are then constructed by replacing the RYSI values in the YSI provided resistance versus temperature tables with the A/D count values from the formula above. This provides look up tables stored in processor 150 listing A/D counts for each degree Centigrade in the temperature range of interest. Temperature values for A/D count values falling between those in the tables are found by linear interpolation. There is a separate look up table for the YSI400 and YSI700 probes.

Using a third method (not employed here) a Taylor series could be used to simulate the logarithmic approximation which could be calculated by the processor 150 for each A/D output or precalculated and stored in look up tables.

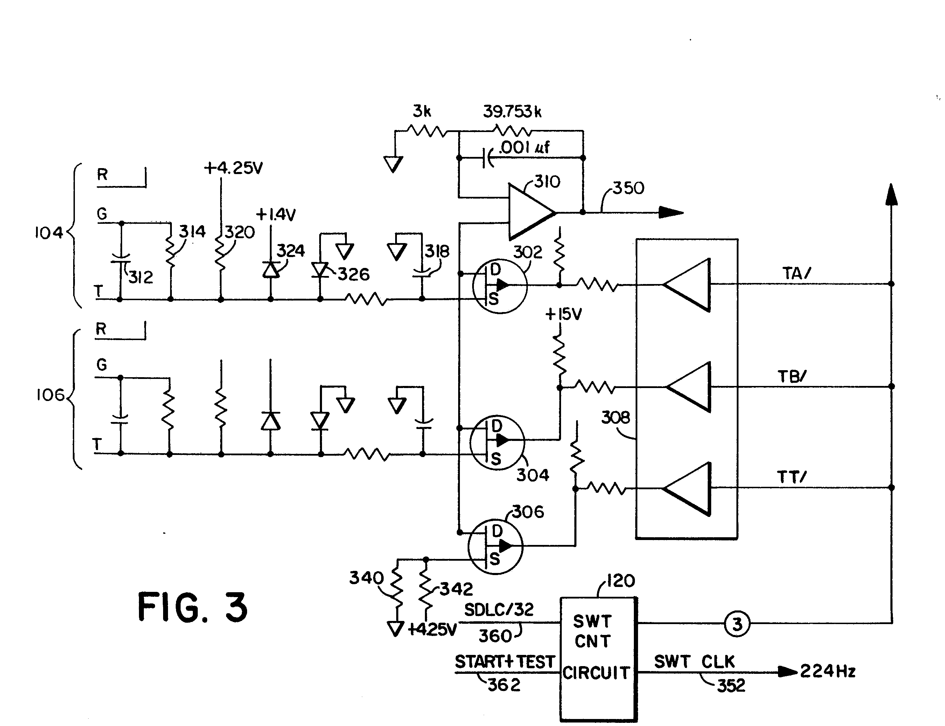

Referring now to FIG. 3, when a probe is placed into terminal jack 104 or 106, three connectors labelled ground (G), ring (R), and tip (T), come in contact with the probe plug. The connectors are positioned in such a way in the jack that for a YSI400 plug the R and G connectors contact the grounded barrel portion and the T connector contacts the tip. For a YSI700 plug, the G connector contacts the barrel of the plug, while the R, the ring and the T, the tip.

Referring first to the jack position 104 in FIG. 3, switch 112 comprises three junction field effect transistors (JFETS) 302, 304 and 306 and driver circuitry 308. The tip connector, T, for jack 104 is coupled to the source of JFET 302 while the tip connector, T, of jack 106 is coupled to the source of JFET 304. The drains of each of the JFETS are coupled together and provide an input to amplifier 310.

The input circuits for JFETS 302 and 304 are identical and only the circuit coupled to jack 104 will be described in detail. Capacitor 312 in parallel with resistor 314 (3942 ohms) is connected across the T and G connectors. This circuit in combination with capacitor 318 connected to the temperature circuit ground provide rejection against RF noise etc.

Resistor 320 (17K ohms) coupled to the T line and to a 4.25 voltage source in combination with resistor 314 provide an effective linearization resistance in parallel with the barrel to tip thermistor resistance of either probe. The effective resistance of resistors 314 and 320 is 3200 ohms which was chosen to provide partial linearization for both the YSI700 and YSI 400 probes. See FIG. 7 which will be discussed in more detail later. This is necessary since it is not known ahead of time which probe type will be placed in a jack.

Diode 324 coupled to a plus 1.4 voltage supply and diode 326 coupled to temperature circuit ground provide input protection for the JFET against electrostatic discharge, for example.

A third circuit comprising resistor 340 coupled to the source of JFET 306 and circuit ground and a resistor 342 in parallel with resistor 340 and coupled to a voltage supply of +4.25 volts is also provided. When JFET 306 is turned on a resistor network equivalent to the input network plus a YSI700 probe at 38.5°C is coupled to amplifier 310. 38.5°C is a number suggested by international requirements.

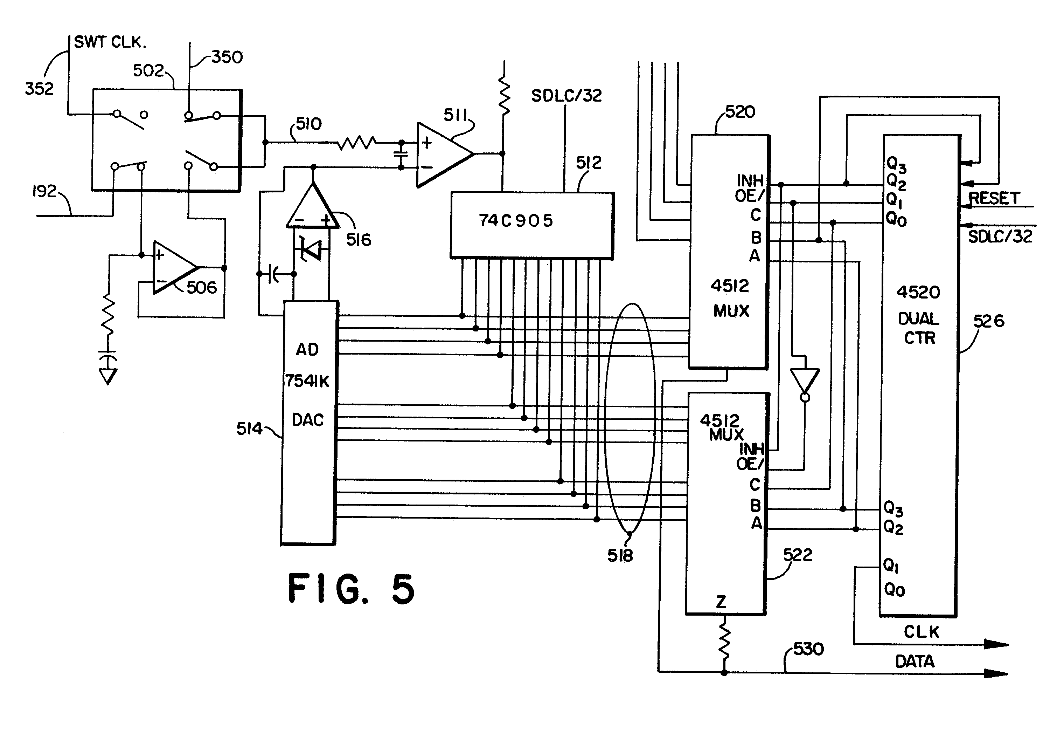

The driver circuit 308 is a Model No. 40109 device made by RCA. When any of the inputs TA/, TB/, or TT/ to circuit 308 goes logic low the driver circuit switches on the associated JFET. The TB/, TA/ and TT/ signals whose timing are shown in FIG. 4 as signals 402, 404 and 406, respectively, are generated by the switch control circuit 120 whose input clocks 360 and 362 are provided by the processor 150 over bus 182 in FIG. 1. The processor 150 in the preferred embodiment is a National Semiconductor NS16008 device.

Clock 360 called SDLC/32 is a 57.344 KHz clock while clock 362 called start and test is a 448 Hz clock generated by the processor 150. Using a combination of conventional counter circuits (4015 and 4520 devices), the switch control circuit generates the signals of FIG. 4 and a 224 Hz clock. Signals TB/, TA/ and TT/ repeat 4.67 times a second and are low one third of the time and high two thirds of the time.

While TB/ is low, TA/ and TT/ are high and only JFET 304 is switched on coupling probe 106 to amplifier 310. Next as TB/ goes high, TA/ goes low coupling probe 104 to amplifier 310. Finally as TA/ goes high, TT/ goes low and this couples the test circuit 117 in FIG. 1 to amplifier 310. Amplifier 110 is a Model No. OP-07EZ op amp manufactured by PMI and a number of other manufacturers. It is configured as a low input offset voltage operational amplifier and its output is coupled via line 350 to circuit 132.

The details of digitizing circuit 130 are shown in FIG. 5. The 224 Hz switch clock from circuit 120 in FIG. 3 (line 352), the output of amplifier 310 (line 350) and the output of pressure circuit 190 in FIG. 1 (line 192) are provided to the switch circuit 132 which in FIG. 5 comprises a IH 5043 CMOS switch 502 (made by Intersil) and a LM 358A amplifier 506. While the 224 Hz clock signal is high the switch couples line 350 to output line 510; and while the 224 Hz clock signal is low it couples line 192 to output line 510. The CMOS switch acts to multiplex the temperature and pressure channels to the A/D converter circuitry. For purposes of the present invention where no pressure channel is present, the CMOS switch is not required and the output of amplifier 310 can be coupled to the A/D circuitry directly.

The A/D converter comprises comparator 511 (an LM393A), successive approximation register (SAR) (a National 74C905), a digital to analog converter 514 (and Analog Devices AD7541K) and op amp 516 OP215FZ. Line 510 from CMOS switch 502 is coupled to the positive input of comparator 511 while the output of op amp 516 is coupled to the negative terminal. The output of comparator 511 is coupled to the D input of SAR 512 along with the SDLC/32 clock to the clock input. The 12 bit output of SAR 512 is coupled to the input of D/A converter 514. This design approach for an A/D converter is well known as a successive approximation register A/D converter.

The twelve bit output of the SAR 512 is coupled via 12 bit bus 518 to the multiplexer circuits 520 and 522 which are Model No. 4512 multiplexers. Four other bits are provided as inputs to the multiplexer circuit 520 and 522 and their origin will be described hereinafter in connection with FIG. 6. A 4520 dual counter 526 is coupled to the multiplexers 520 and 522 and in response to the SDLC/32 clock input causes the 16 bit input to circuits 520 and 522 to be provided serially over line 530 to microprocessor 150. In the preferred embodiment the clocking rate is 14336 bits/second which allows fifty percent idle time between A/D readings.

Referring now to FIGS. 1 and 6, the R (ring) connector of the jacks 104 and 106 are coupled to identification circuits 172 and 174 via lines 103 and 105, respectively. The circuits 172 and 174 are identical circuits, so only circuit 172 will be described in detail.

The R connector is coupled via series resistors 602 and 604 to the emitter of NPN transistor 606. The collector of transister 606 is coupled through resisters 608 and 610 to a +5.1 volt supply while the junction of resistors 608 and 610 is coupled via line 612 as an input to logic circuit 176. Circuit 174 similarly provides an input to logic circuit 176 via line 614. Resistor 616 in parallel with resistor 602 is coupled to a minus 5 volt power supply.

If a YSI400 plug is coupled to circuit 172, the R connector will be at ground with the G connector and transistor 606 will not turn on. Effectively then a logic high will be provided from the +5.1 volts power source at resistor 610 to logic circuit 176 from the detector circuit 172.

If a YSI700 probe is coupled to circuit 172, then a resistance will appear between the R connector and circuit ground. The ring resistance is between 10.97K ohms and 94.89K ohms in the temperature range 0°C to 50°C. When the ring resistance exceeds 5000 ohms, the transistor 606 begins to turn on and the voltage at line 612 drops to a logic low.

If a YSI 700 probe with tip to ring short circuit is coupled to circuit 172, there is sufficient current available from -5V and resistor 616 to insure that partial linearizing circuit 114 is forced negative. The A/D converter 134 will output zero counts. Processor 150 will identify zero counts as a fault condition.

If either YSI700 or YSI400 probe type has a tip to barrel short circuit, the A/D converter 134 will output zero counts and processor 150 will again identify zero counts as a fault condition. Most temperature circuits commercially available can identify tip to barrel shorts.

The above discussion relating to circuit 172 is also applicable to circuit 174.

Based on the inputs from circuits 172 and 174, the switch clock signal and the TA/, TB/ and TT/ signals, logic circuit 176 provides a three bit signal via bus 180 to parallel to serial converter 136 along with the output of SAR 512 in FIG. 5. These three bits identify which temperature channel is active and whether a YSI400 or YSI700 probe is coupled to the channel. The test circuit always provides a voltage equivalent to 38.5°C assuming a YSI700 probe is connected to an input circuit.

With the teachings of the present invention, either a YSI400 or YSI700 probe can be used in either input to the dual temperature circuit and the circuit automatically identifies which probe is being used. There is no need to use a dedicated circuit for each probe type or to make operator adjustments.

Also, with the partial linearization circuit, the circuit design for digitizing the input signals for either or both YSI400 or YSI700 probes is simplified, cheaper and less power consuming. As an example, using the A/D circuit design described in FIG. 5, FIG. 7 shows the shape of the temperature versus A/D output curves for both the YSI400 and YSI700 probes. For both probes in the temperature region of interest (0-50°C) the curves are substantially linear. This results in greater accuracy in temperature measurement.

Claims:

1.    An electrical circuit for coupling to any probe selected from a plurality of preselected probe types and coupled to a patient for measuring the body temperature of said patient, said circuit comprising:

a first circuit responsive to said selected probe for generating an electrical signal proportional to the body temperature of said patient; and

a second circuit for converting said electrical signal to a temperature quantity in degrees on a preselected scale said second circuit including:

an identifying circuit for generating an output signal which automatically identifies the probe type of said selected probe.

2.    The electrical circuit of Claim 1 wherein said second circuit further comprises digitizing means including an analog to digital converter for converting the electrical signal associated with said selected probe to a multibit digital output signal; and

said first circuit further comprises linearization means coupled between said selected probe and said digitizing means for partial linearization of said electrical signal whereby the digitizing means output signal associated with said selected probe is substantially linearly proportional to the temperature of said patient.

3.    The electrical circuit of Claim 2 wherein said selected probe comprises a thermistor and said linearization circuit comprises a resistance circuit coupled in parallel with said thermistor.

4.    The electrical circuit of Claim 2 or 3 wherein said second circuit further comprises logic circuit means for merging the output signal of said identifying means into said multibit digital output signal to form a combined digital output signal.

5.    The electrical circuit of Claim 4 wherein said second circuit further comprises a processing means for converting the combined digital output signal to a temperature in degrees on a preselected scale.

6.    The electrical circuit of Claim 5 wherein said processing means further comprises a look up table for each probe type for relating the output of the A/D converter to a temperature in degrees on said preselected scale.

7.    The apparatus of any of Claims 1 to 6 wherein said identifying means further comprises sensing means coupled to preselected portions of said selected probe for determining when the electrical resistance between said preselected portions exceeds a predetermined threshold resistance.

8.    An electrical circuit for coupling to a plurality of probes each of which is selected from a plurality of probe types, said probes coupled to a patient for measuring the body temperature of said patient at a plurality of locations, said circuit comprising:

a first circuit responsive to each of said plurality of probes for generating an electrical signal associated with each of said probes and which is proportional to the body temperature of said patient at the location of said probe;

a second circuit for converting each of said electrical signals to a temperature quantity in degrees on a preselected scale, said second circuit including:

an identifying circuit for generating output signals which automatically identify the probe type of each of said probes; and

said first circuit further comprising an electrical switching means coupled to said plurality of probes for sequentially coupling each of said probes to said second circuit.

9. The electrical circuit of Claim 8 wherein said second circuit further comprises digitizing means including an analog to digital converter for converting each of said electrical signals associated with said probes to a multibit digital output signal; and

said first circuit further comprises linearization means coupled between said plurality of probes and said digitizing means for partial linearization of said electrical signals associated with said probes whereby the digitizing means output signals associated with each of said probes is substantially linearly proportional to the temperature of said patient at the location of each of said probes.

10. The electrical circuit of Claim 9 wherein said second circuit further comprises a logic circuit means responsive to said electrical switching means and said output signals from said identifying circuit for merging an output signal with each of said multibit digital output signals to form a combined digital signal, said identifying circuit output signal being representative of the identity and type of the probe associated with the multibit digital output signal.

11. The electrical circuit of Claim 10 wherein said second circuit further comprises a processing means having a look up table for each probe type for converting the combined digital output signal to a temperature in degrees on a preselected scale.

12. The electrical circuit of Claim 10 or 11 wherein said electrical circuit comprises a separate identifying circuit for each probe.

13. The electrical circuit of any of Claims 9 to 12 wherein said electrical circuit comprises a separate but identical linearization means for each probe.

14. A method of measuring the temperature of a patient from any one probe selected from a plurality of probe types and coupled to said patient said method comprising the steps of:

generating an electrical signal proportional to the temperature of said patient at a location at which said selected probe is coupled; and

generating an electrical signal which identifies automatically the probe type of said selected probe associated with the electrical signal.

15. The method of Claim 14 wherein said method further comprises the steps of:

partially linearizing the electrical signal associated with said selected probe; and

converting said partially linearized signal to a multibit digital output signal.

16. The method of Claim 15 wherein said step of converting further comprises the step of merging said identifying electrical signal with said multibit digital signal.

17. The method of Claim 16 wherein said method further comprises storing a look up table for each of said probe types, each of said look up tables containing a plurality of temperature measurements in degrees on a preselected scale associated with said multibit digital signals.

18. The method of Claim 17 wherein said method further comprises the step of interpolating between degree readings in said look up tables in response to said multibit digital signals.

19. The method of any of Claims 15 to 18 wherein said method further comprises the step of detecting faults in preselected probes.

FIG. 1

200

206 208 210 212

T2 216

214

204

FIG.2A

T1 218

220

226 229 228

FIG.2B

T 230

224

402

404

FIG. 4

406

TB /

TA /

TT /

616

-5V

R

602 604

2N3904

606

608

610 +5.1

612

R

614

+5.1

TA/ TB/ TT/

SWT CLK

FIG. 6

LOGIC 176

3

0 193 950

FIG. 3

**FIG. 5**

FIG.7

0 193 950